# EUROPEAN PATENT SPECIFICATION

(11) **EP 2 963 713 B1**
(45) Date of publication and mention of the grant of the patent: **12.10.2016**
(21) Application number: 15170369.1
(22) Date of filing: 03.06.2015
(51) Int. Cl.: H01M 8/04007, H01M 8/04858, H01M 8/04992, H01M 8/0438, H01M 8/12

(54) **FUEL CELL SYSTEM**
BRENNSTOFFZELLENSYSTEM
SYSTÈME DE PILE À COMBUSTIBLE

(30) Priority: 30.06.2014 JP 2014134697
(43) Date of publication of application: 06.01.2016
(73) Proprietor: AISIN SEIKI KABUSHIKI KAISHA, Kariya-shi, Aichi 448-8650 (JP)
(72) Inventor: Ohkawara, Hiroki, Kariya-shi, Aichi 448-8650 (JP)
(74) Representative: TBK

(56) References cited:
- EP-A1- 2 639 870

## Description

### TECHNICAL FIELD

This disclosure relates to a fuel cell system.

### BACKGROUND DISCUSSION

JP 2009-70747A (Reference 1) discloses one type of a fuel cell system. As illustrated in Fig. 1 of Reference 1, the fuel cell system includes a fuel cell 2, a package 1 which stores the fuel cell 2, a ventilation fan 6 which causes the inside of the package 1 to be ventilated, and a ventilation sensor 7 which detects an operation state of the ventilation fan 6. Since a fuel gas used in electricity generation of the fuel cell 2 is combustible, it is required to ensure safety when the fuel gas flows in the package 1. Specifically, when the inside of the package 1 is ventilated, the ventilation fan 6 is controlled to cause the volume of ventilation in the package 1 to be equal to or greater than a predetermined volume of ventilation such that a proportion of a fuel gas in fluid which flows outwardly (to the outer atmosphere) from the package 1 through a ventilation outlet 5 becomes lower to an extent that the fluid is not combustible. When the ventilation sensor 7 detects that a volume of ventilation by the ventilation fan 6 is smaller than the predetermined volume of ventilation, it is determined that the ventilation fan 6 or the ventilation sensor 7 has a problem and an operation of the fuel cell system is suspended.

The fuel cell system determines whether or not the ventilation sensor 7 is normal in such a manner that the controls the ventilation fan 6 to temporarily cause the volume of ventilation in the package 1 to be reduced such that the volume of ventilation in the package 1 is smaller than the predetermined volume of ventilation in the package 1, and checks whether or not the volume of ventilation detected by the ventilation sensor 7 is smaller than the predetermined volume of ventilation.

However, in the fuel cell system which is described above and is disclosed in Reference 1, deterioration of the ventilation fan 6 may cause the volume of ventilation to be reduced. When the ventilation sensor 7 detects that the volume of ventilation in the package 1 is smaller than the predetermined volume of ventilation, although the ventilation fan 6 operates normally, it is determined that the ventilation fan 6 has a problem, and an operation of the fuel cell system is suspended. In order to prevent such occurrence, it is necessary that the ventilation fan 6 is controlled to have relatively large quantity of drive such that the volume of ventilation in the package 1 is caused to become a volume of ventilation which is larger than the predetermined volume of ventilation in consideration of deterioration of the ventilation fan 6, and the like. In order to improve electricity generation efficiency of the fuel cell 2, power consumption of auxiliary devices such as the ventilation fan 6 is required to be reduced. That is, it is required that the ventilation fan 6 is controlled to have relatively small quantity of drive.

EP 2 639 870 A1 discloses a fuel cell system comprising a ventilation fan and a flow rate sensor, wherein a controller controls the ventilation fan based on a manipulated variable which can be increased when the detected flow rate decreases so as to increase the flow rate through the ventilation passage.

### SUMMARY

Thus, a need exists for a fuel cell system which enables a ventilation fan to be controlled so as to have a relatively small quantity of drive, and thus can reduce power consumption.

A first aspect of this disclosure is directed to a fuel cell system which includes a fuel cell that generates electricity by using fuel and an oxidant gas, a housing that stores the fuel cell, a ventilation fan that causes the inside of the housing to be ventilated, a flow state detection switch that is arranged on a flow path of fluid which flows due to ventilation, and a controller that controls at least the ventilation fan. The flow state detection switch outputs an ON signal if the fluid flows, and outputs an OFF signal if the fluid does not flow, when the ventilation fan causes the inside of the housing to be ventilated. The controller controls the quantity of drive of the ventilation fan. The controller includes a storage unit and a setting unit. The storage unit stores a control command value of the ventilation fan as a switch control command value, the control command value of the ventilation fan corresponding to the quantity of drive of the ventilation fan when an output of the flow state detection switch is switched. The setting unit sets the minimum control command value of the ventilation fan based on the switch control command value stored in the storage unit,

According to the first aspect of this disclosure, the controller sets the minimum control command value of the ventilation fan based on the switch control command value which is stored in the storage unit. For this reason, it is possible to cause the minimum control command value of the ventilation fan to approach as close as possible to a control command value of the ventilation fan corresponding to quantity of drive of the ventilation fan when the output of the flow state detection switch is switched. Thus, it is possible to reduce quantity of drive of the ventilation fan, which heretofore has been set to be relatively higher than quantity of drive corresponding to a flow rate at which the flow state detection switch is switched, and therefore it is possible to relatively reduce power consumption of the ventilation fan. Accordingly, it is possible to reduce the amount of power consumed by the fuel cell system.

A second aspect of this disclosure is directed to the fuel cell system according to the first aspect of this disclosure, wherein the storage unit performs storing before a start-up operation of the fuel cell system is started, and the setting unit performs setting based on the switch control command value which is stored in the storage unit.

According to the second aspect of this disclosure, the setting unit sets the minimum control command value of the ventilation fan based on the switch control command value which is stored in the storage unit before the start-up operation of the fuel cell system is started. Since a combustion exhaust gas or the like is not discharged before the start-up operation of the fuel cell system is started, the flow rate of the combustion exhaust gas does not have an influence on the driving of the flow state detection switch and the minimum control command value of the ventilation fan is set. Accordingly, it is possible to set the minimum control command value of the ventilation fan with high accuracy.

In the described fuel cell system according to the first or the second aspect of this disclosure, for example, when the fuel cell system continuously generates electricity for a long period of time, even though the controller outputs the same control command value to the ventilation fan, the quantity of drive may be reduced due to deterioration of the ventilation fan, and the like, and thereby the flow state detection switch may output the OFF signal. That is, regardless of an operation of the ventilation fan, the flow state detection switch may perform incorrect detection.

On the other hand, a third aspect of this disclosure is directed to the fuel cell system according to the first or second aspect of this disclosure, wherein the storage unit performs storing periodically during a start-up operation, a generation operation, or a suspension operation of the fuel cell system, and the setting unit performs setting based on the switch control command value which is stored in the storage unit.

According to the third aspect of this disclosure, the setting unit periodically sets the minimum control command value of the ventilation fan based on the switch control command value which is stored in the storage unit. For this reason, the minimum control command value of the ventilation fan is periodically updated based on the switch control command value corresponding to the quantity of drive of the ventilation fan at a time when the setting unit performs setting. Thus, even though the fuel cell system continuously operates for a long period of time, it is possible to suppress incorrect detection of the flow state detection switch regardless of an operation of the ventilation fan.

A fourth aspect of this disclosure is directed to the fuel cell system according to any one of the first to the third aspects of this disclosure, wherein the storage unit performs storing when the output of the flow state detection switch which is the ON signal changes to the OFF signal during a start-up operation, a generation operation, or a suspension operation of the fuel cell system, and the setting unit performs setting based on the switch control command value which is stored in the storage unit.

According to the fourth aspect of this disclosure, the setting unit sets the minimum control command value of the ventilation fan based on the switch control command value which is stored in the storage unit, when the output of the flow state detection switch which is the ON signal changes to the OFF signal in the start-up operation, the generation operation, or the suspension operation of the fuel cell system. Thus, even though the fuel cell system continuously operates for a long period of time, it is possible to update the minimum control command value of the ventilation fan with relative convenience.

A fifth aspect of this disclosure is directed to the fuel cell system according to any one of the first to the fourth aspects of this disclosure, wherein the switch control command value is a control command value of the ventilation fan corresponding to quantity of drive of the ventilation fan when the output of the flow state detection switch which is the OFF signal changes to the ON signal,

According to the fifth aspect of this disclosure, for example, quantity of drive of the ventilation fan is zero and the flow state detection switch outputs the OFF signal before the start-up operation of the fuel cell system is started. In a case where the output of the flow state detection switch which is the ON signal changes to the OFF signal in the start-up operation, the generation operation, or the suspension operation of the fuel cell system, the quantity of drive of the ventilation fan may become relatively small and thus the flow state detection switch outputs the OFF signal. In these cases, the storage unit increases the quantity of drive of the ventilation fan at this time, and thus the output of the flow state detection switch may be switched from the OFF signal to the ON signal. Thus, it is possible to switch the output of the flow state detection switch for a relatively short period of time, compared to a case where the storage unit increases the quantity of drive of the ventilation fan and then reduces the quantity of drive, and thus the output of the flow state detection switch is switched from the ON signal to the OFF signal. Accordingly, it is possible to set the minimum control command value of the ventilation fan for a relatively short period of time.

A sixth aspect of this disclosure is directed to the fuel cell system according to any one of the first to the fifth aspects of this disclosure, wherein the switch control command value has an ON control command value and an OFF control command value. The ON control command value is a value when the output of the flow state detection switch is switched from the OFF signal to the ON signal. The OFF control command value is a value when the output of the flow state detection switch is switched from the ON signal to the OFF signal. The flow state detection switch has hysteresis characteristics which cause a first flow rate of the fluid corresponding to the ON control command value to be higher than a second flow rate of the fluid corresponding to the OFF control command value. The controller further includes a correction unit that corrects the minimum control command value of the ventilation fan which is set by the setting unit, considering the hysteresis characteristics.

According to the sixth aspect of this disclosure, when the setting unit sets the minimum value of the control command value of the ventilation fan to approach as close as possible to the ON control command value corresponding to the first flow rate, based on the ON control command value, for example, the correction unit performs correction such that the minimum value approaches as close as possible to the OFF control command value corresponding to the second flow rate which is lower than the first flow rate, considering the hysteresis characteristics of the flow state detection switch. Thus, it is possible to appropriately reduce the quantity of drive of the ventilation fan and thus to appropriately reduce power consumption of the ventilation fan. Accordingly, it is possible to appropriately reduce the amount of power consumed by the fuel cell system.

### BRIEF DESCRIPTION OF THE DRAWINGS

The foregoing and additional features and characteristics of this disclosure will become more apparent from the following detailed description considered with the reference to the accompanying drawings, wherein:
Fig. 1 is a schematic diagram illustrating a first embodiment of a fuel cell system disclosed here;
Fig. 2 is a cross-sectional view of a flow state detection switch illustrated in Fig. 1;
Fig. 3 is a view illustrating an operation of the flow state detection switch, illustrated in Fig. 2 and illustrates an output of the flow state detection switch, the flow rate of fluid, and a control command value in an order from an upper stage;
Fig. 4 is a diagram illustrating a relationship of the temperature of the inside of the housing and the control command value for the ventilation fan when a controller illustrated in Fig. 1 causes the inside of a housing to be ventilated;
Fig. 5 is a flowchart of a control program executed by the controller illustrated in Fig. 1;
Fig. 6 is a flowchart of a control program in a second embodiment of the fuel cell system disclosed here; and
Fig. 7 is a flowchart of a control program in a modification example of the second embodiment of the fuel cell system disclosed here.

### RETAILED DESCRIPTION

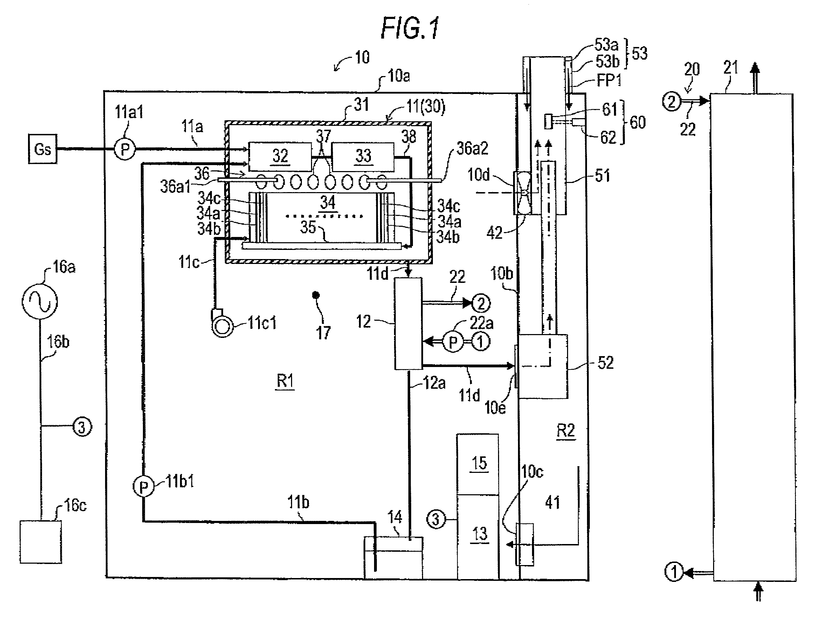

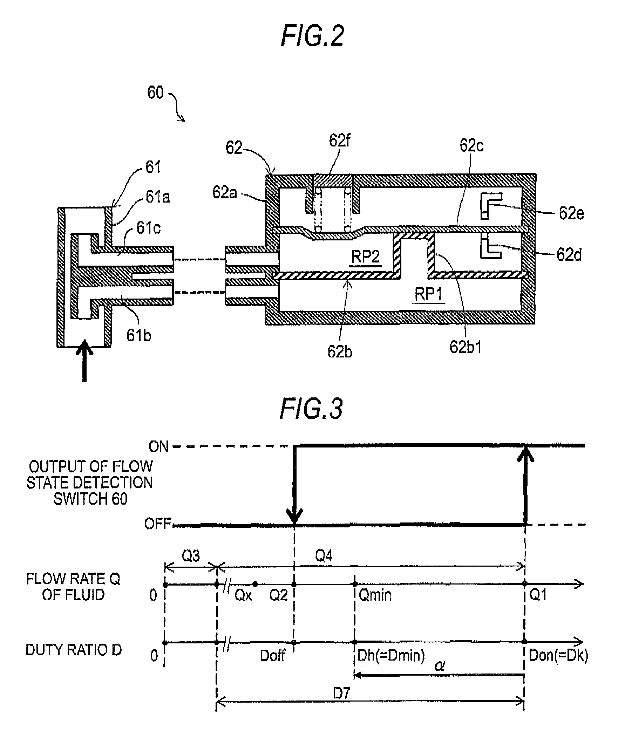

Hereinafter, a first embodiment of a fuel cell system disclosed here will be described. In this specification, descriptions will be made by using an upper side and a lower side in Figs. 1 and 2 as an upper part and a lower part of the fuel cell system for a convenient description. As illustrated in Fig. 1, the fuel cell system includes an electricity generation unit 10 and a hot water storage tank 21. The electricity generation unit 10 includes a housing 10a, a fuel cell module 11, a heat exchanger 12, an inverter 13, a water tank 14, and a controller 15.

The fuel cell module 11 is configured to include at least a fuel cell 34, as will be described later. A raw reforming material, water for reforming, and cathode air are fed to the fuel cell module 11. Specifically, one end of a raw reforming material feed pipe 11a which causes the raw reforming material to be fed is connected to a feed source Gs and another end of the raw reforming material feed pipe 11a is connected to the fuel cell module 11. A raw material pump 11a1 is provided in the raw reforming material feed pipe 11 a. A water feed pipe 11 b which causes the water for reforming to be fed has one end which is connected to the water tank 14 and another end which is connected to the fuel cell module 11. A water pump for reforming 11b1 is provided in the water feed pipe 11b. A cathode air feed pipe 11c which causes the cathode air to be fed has one end which is connected to a cathode air blower 11c1, and another end which is connected to the fuel cell module 11.

The heat exchanger 12 is a heat exchanger to which a combustion exhaust gas which is exhausted from the fuel cell module 11 and hot water from the hot water storage tank 21 are supplied and in which heat exchange is performed between the combustion exhaust gas and the hot water. Specifically, the hot water storage tank 21 stores the hot water and a hot water circulation line 22 in which the hot water is circulated (circulated in a direction indicated by arrows in Fig. 1) is connected to the hot water storage tank 21. A hot water circulation pump 22a and the heat exchanger 12 are arranged on the hot water circulation line 22 in order from a lower end of the hot water storage tank 21 to an upper end. An exhaust pipe 11d from the fuel cell module 11 is connected (provided to pass through) to the heat exchanger 12. A condensed water feed pipe 12a which is connected to the water tank 14 is connected to the heat exchanger 12.

In the heat exchanger 12, the combustion exhaust gas from the fuel cell module 11 passes through the exhaust pipe 11d and is introduced into the heat exchanger 12. Heat exchange is performed between the combustion exhaust gas and the hot water, and thus the combustion exhaust gas is condensed and cooled. The condensed combustion exhaust gas passes through the exhaust pipe 11d and a combustion exhaust duct 52 (which will be described later) and then is discharged outwardly. The condensed water passes through a condensed water feed pipe 12a and is supplied to the water tank 14. The water tank 14 causes the condensed water to become pure water by using ion exchange resin.

The heat exchanger 12, the hot water storage tank 21, and the hot water circulation line 22 which are described above, constitute a waste heat recovery system 20. The waste heat recovery system 20 collects and stores waste heat of the fuel cell module 11 in the hot water.

The inverter 13 converts a DC voltage which is output from the fuel cell 34 into a predetermined AC voltage and is output to a power line 16b which is connected to an AC system power supply 16a and an external power load 16c (for example, electric appliance). The inverter 13 receives an AC voltage from the system power supply 16a through the power line 16b. The inverter 13 converts the input AC voltage into a predetermined DC voltage, and then outputs the direct current to auxiliary machines (pumps, blower, and the like) or the controller 15. The controller 15 drives the auxiliary machines so as to control an operation of the fuel cell system.

The fuel cell module 11 (30) includes a casing 31, an evaporation section 32, a reforming section 33, and a fuel cell 34. The casing 31 is formed of a heat-insulating material to have a box shape.

The evaporation section 32 is heated by a combustion gas (which will be described later) so as to evaporate water for reforming which is fed and generates steam, and preheats a raw reforming material which is fed. The evaporation section 32 mixes the steam which is generated in this manner with the preheated raw reforming material and feeds mixture to the reforming section 33. Examples of the raw reforming material include reforming gas fuel such as natural gas and LP gas or reforming liquid fuel such as kerosene, gasoline, and methanol, In this embodiment, descriptions will be made by using natural gas as the raw reforming material.

Another end of the water feed pipe 11 b having one end (lower end) which is connected to the water tank 14 is connected to the evaporation section 32. The raw reforming material feed pipe 11a having one end which is connected to the feed source Gs is connected to the evaporation section 32. The feed source Gs is, for example, a gas feed pipe of city gas or a gas cylinder of LP gas.

The reforming section 33 is heated by the above-described combustion gas so as to receive heat necessary for a steam reforming reaction, and thus generates and obtains a reformed gas from a gas mixture (raw reforming material and steam) which is fed from the evaporation section 32. The reforming section 33 is filled with a catalyst (for example, Ru-based catalyst or Ni-based catalyst). The gas mixture is reacted and reformed by the catalyst and thus a gas containing hydrogen gas, carbon monoxide, and the like is generated (so-called steam reforming reaction). The reformed gas contains hydrogen, carbon monoxide, carbon dioxide, steam, unreformed natural gas (methane gas), and water for reforming (steam) which is not used in reforming. In this manner, the reforming section 33 generates the reformed gas (raw fuel) from the raw reforming material and the water for reforming and feeds the generated reformed gas to the fuel cell 34. The steam reforming reaction is an endothermic reaction.

The fuel cell 34 is configured in such a manner that a plurality of cells 34a are stacked and the cell includes a fuel electrode, an air electrode (oxidant electrode), and an electrolyte which is disposed between both of the electrodes. The fuel cell 34 in this embodiment is a solid oxide fuel cell and uses zirconium oxide which is one type of solid oxide, as the electrolyte. Hydrogen, carbon monoxide, methane gas, and the like are fed to the fuel electrode of the fuel cell 34, as the fuel. An operation temperature is in a range of 400 to 1000°C. Natural gas, coal gas, or the like may be directly used as the fuel in addition to hydrogen. In this case, the reforming section 33 may be omitted.

A fuel flow path 34b in which the reformed gas (fuel) flows is formed on the fuel electrode side of the cell 34a. An air flow path 34c in which the air (cathode air) (oxidant gas) flows is formed on the air electrode side of the cell 34a.

The fuel cell 34 is provided on a manifold 35. The reformed gas is fed to the manifold 35 from the reforming section 33 through a reformed gas feed pipe 38. The fuel flow path 34b has a lower end (one end) which is connected to a fuel outlet of the manifold 35, and the reformed gas output from the fuel outlet is introduced from the lower end and is output from an upper end. The cathode air which is delivered by the cathode air blower 11c1 is fed through the cathode air feed pipe 11c, and is introduced from a lower end of the air flow path 34c and is output from an upper end thereof.

A combusting section 36 is provided between the fuel cell 34, and the evaporation section 32 and the reforming section 33. The combusting section 36 combusts an anode off gas (fuel off gas) from the fuel cell 34 and a cathode off gas (oxidant off gas) from the fuel cell 34, and thereby heats the reforming section 33.

In the combusting section 36, flame 37 is generated by combusting the anode off gas. In the combusting section 36, the anode off gas is combusted and thereby the combustion exhaust gas thereof is generated. A pair of ignition heaters 36a1 and 36a2 is provided in the combusting section 36 in order to ignite the anode off gas.

The housing 10a is partitioned into a fuel cell room R1 and an exhaust duct room R2 by a middle panel 10b. The fuel cell module 11, the heat exchanger 12, the inverter 13, the water tank 14, and the controller 15 are disposed in the fuel cell room R1. A duct for ventilation and exhaust 51 and the combustion exhaust duct 52 are disposed in the exhaust duct room R2.

An intake port 10c for sucking the outside air into the fuel cell room R1, an exhaust port for ventilation 10d which is used for discharging the air in the fuel cell room R1 outwardly, and an exhaust port for combustion exhaust gas 10e which is used for discharging the combustion exhaust gas from the heat exchanger 12 outwardly are formed in the middle panel 10b. A check valve 41 is provided in the intake port 10c. The check valve 41 allows an air flow from the exhaust duct room R2 to the fuel cell room R1, but limits a reverse air flow.

A ventilation fan 42 is provided in the exhaust port for ventilation 10d. The ventilation fan 42 delivers the air in the fuel cell room R1 outwardly. The duct for ventilation and exhaust 51 is connected to the exhaust port for ventilation 10d. Another end of the duct for ventilation and exhaust 51 is connected to an inner pipe 53a of a chimney portion 53. If the ventilation fan 42 is driven, the air (air of ventilation or exhaust) in the fuel cell room R1 passes through the exhaust port for ventilation 10d, the duct for ventilation and exhaust 51, and the inner pipe 53a of the chimney portion 53 and then is discharged outwardly (indicated by a broken arrow).

One end of the combustion exhaust duct 52 is connected to the exhaust port for combustion exhaust gas 10e. Another end of the combustion exhaust duct 52 is joined with the duct for ventilation and exhaust 51. At a time when electricity is generated in the fuel cell system, the combustion exhaust gas which is discharged from the fuel cell module 11 passes through the exhaust port for combustion exhaust gas 10e and the combustion exhaust duct 52, and then is output to the duct for ventilation and exhaust 51 (indicated by a dashed line arrow). The output combustion exhaust gas is joined with the air of ventilation or exhaust, passes through the duct for ventilation and exhaust 51 and the inner pipe 53a of the chimney portion 53, and then is discharged outwardly.

The chimney portion 53 has a double pipe structure and is configured from the inner pipe 53a and an outer pipe 53b. An intake flow path FP1 is formed between the inner pipe 53a and the outer pipe 53b. The intake flow path FP1 causes the outside of the housing 10a and the exhaust duct room R2 to communicate with each other. The outside air passes through the intake flow path FP1 and then flows (sucks) in the exhaust duct room R2.

The fuel cell system further includes a temperature sensor 17 and a flow state detection switch 60. The temperature sensor 17 is arranged in the housing 10a and detects the temperature Th of fluid which flows in the housing 10a.

The flow state detection switch 60 is arranged on a flow path of fluid which flows due to ventilation, and detects the presence or absence of the flow of the fluid when the ventilation fan 42 causes the inside of the housing 10a to be ventilated. The flow state detection switch 60 includes a pressure introducing portion 61 and a switch portion 62.

The pressure introducing portion 61 is arranged in the duct for ventilation and exhaust 51 and introduces pressure of the fluid into the switch portion 62. As described above, since the combustion exhaust gas passes through the combustion exhaust duct 52 and flows in the duct for ventilation and exhaust 51, the pressure of the fluid which is introduced into the flow state detection switch 60 refers to pressure of at least one of the air of ventilation or exhaust and the combustion exhaust gas.

The pressure introducing portion 61 has a function which is similar to a general pitot tube. As illustrated in Fig. 2, the pressure introducing portion 61 includes a throttle tube 61 a, a first pressure introducing tube 61b, and a second pressure introducing tube 61 c.

The throttle tube 61a is formed to have a hollow cylindrical shape, and is arranged along the flow of the fluid (indicated by a solid line arrow) such that the fluid flows in the throttle tube 61 a.

One end of the first pressure introducing tube 61b is open downwardly in the throttle tube 61a. When ventilation is performed, the total pressure of fluid which flows in the throttle tube 61a is applied to the first pressure introducing tube 61b. The total pressure of the fluid refers to pressure obtained by combining the static pressure and the dynamic pressure of the fluid. One end of the second pressure introducing tube 61c is open upwardly in the throttle tube 61a and the static pressure of the fluid which flows in the throttle tube 61a is applied to the second pressure introducing tube 61c.

The switch portion 62 is a switch which outputs an ON signal when a flow of fluid is detected, and outputs an OFF signal when the flow of the fluid is not detected. The switch portion 62 includes a housing 62a, a roller 62b, a movable piece 62c, a first fixed piece 62d, and a second fixed piece 62e.

The inside of the housing 62a is partitioned into a first pressure room RP1 and a second pressure room RP2 by the roller 62b. The first pressure room RP1 communicates with the first pressure introducing tube 61b (indicated by a broken line). Thus, pressure (total pressure of fluid which flows in the throttle tube 61 a) which is applied to the one end of the first pressure introducing tube 61 b is introduced into the first pressure room RP1.

The movable piece 62c, the first fixed piece 62d, and the second fixed piece 62e are arranged in the second pressure room RP2. The second pressure room RP2 communicates with the second pressure introducing tube 61c (indicated by a broken line). Thus, pressure (static pressure of the fluid which flows in the throttle tube 61a) which is applied to the one end of the second pressure introducing tube 61c is introduced into the second pressure room RP2.

The roller 62b is a diaphragm which is formed of an elastic material so as to be elastically deformable.

The movable piece 62c is formed of a conductive material so as to have a plate shape and to be elastically deformable. A protruding end of a protrusion portion 62b1 which is formed on the roller 62b comes into contact with a lower surface of the movable piece 62c.

The first fixed piece 62d and the second fixed piece 62e are formed of a conductive material and arranged in spaces with the movable piece 62c interposed therebetween.

When there is no flow of fluid and there is no pressure difference between both of the pressure rooms RP1 and RP2, the movable piece 62c and the first fixed piece 62d come into contact with each other, as illustrated in Fig. 2. In this case, the switch portion 62 outputs the OFF signal to the controller 15.

When a flow of the fluid is generated, a pressure difference between both of the pressure rooms RP1 and RP2 occurs due to pressure introduced into the first pressure room RP1 and pressure introduced into the second pressure room RP2, and the roller 62b is deformed from a plate shape (illustrated in Fig. 2) to a shape which is convex upwardly, At this time, since the protrusion portion 62b1 pushes the movable piece 62c up, the movable piece 62c is deformed from a plate shape (illustrated in Fig. 2) to a shape which is convex upwardly. When the movable piece 62c and the second fixed piece 62e are brought into contact with each other by deformation of the movable piece 62c, the switch portion 62 outputs the ON signal to the controller 15.

As illustrated in Fig. 3, if the flow rate Q of fluid which flows in the throttle tube 61a gradually increases in a state where the flow state detection switch 60 has output the OFF signal, and then becomes a first flow rate Q1, the movable piece 62c and the second fixed piece 62e are brought into contact with each other and the flow state detection switch 60 outputs the ON signal. The first flow rate Q1 is a flow rate which causes a pressure difference (dynamic pressure) between both of the pressure rooms RP1 and RP2 to occur, and the pressure difference (dynamic pressure) is necessary for the flow state detection switch 60 to output the ON signal. The value of the first flow rate Q1 may be adjusted by an adjustment portion 62f which is further included in the flow state detection switch 60.

If the flow rate Q of fluid which flows in the throttle tube 61a gradually decreases in a state where the flow state detection switch 60 has output the ON signal, and then becomes a second flow rate Q2 which is smaller than the first flow rate Q1, the movable piece 62c and the first fixed piece 62d are brought into contact with each other and the flow state detection switch 60 outputs the OFF signal. A difference between the first flow rate Q1 and the second flow rate Q2 is determined by using the hysteresis characteristics which are possessed by the flow state detection switch 60.

Next, an example of a basic operation of the above-described fuel cell system will be described. The controller 15 starts a start-up operation when a start switch (not illustrated) is pressed and an operation is started, or when an operation is started in accordance with a scheduled operation.

When the start-up operation is started, the controller 15 operates the auxiliary machines. Specifically, the controller 15 operates the pumps 11a1 and 11b1 and starts the feeding of the raw reforming material and the condensed water (water for reforming) to the evaporation section 32. In the combusting section 36, the raw reforming material and the reformed gas which are output from the fuel cell 34 are ignited by the ignition heaters 36a1 and 36a2. When the temperature of the reforming section 33 is equal to or higher than a predetermined temperature (for example, 600°C), the start-up operation is ended and a generation operation is started. In the generation operation, the controller 15 controls the auxiliary machines such that power generated in the fuel cell 34 becomes power consumption of an external power load 16c, and thus the reformed gas and the cathode air are fed to the fuel cell 34.

When a stop switch (not illustrated) is pressed and the generation operation is suspended in such a generation operation, or when an operation is suspended in accordance with the operation schedule in such a generation operation, the controller 15 performs a suspension operation (suspension processing) of the fuel cell system. The controller 15 suspends feeding of the raw reforming material and the condensed water to the evaporation section 32 and suspends feeding of the reformed gas and the air to the fuel cell 34. If generation in the fuel cell 34 is ended due to the amount of a remaining raw material, the suspension operation is ended.

If such a suspension operation is ended, the fuel cell system comes into a standby state (waiting time). The waiting time refers to a generation suspension state (that is, a state where neither of the start-up operation, the generation operation, or the suspension operation is performed) of the fuel cell system. Further, the waiting time refers to a state of waiting for a generation instruction (ON of the start switch, and the like).

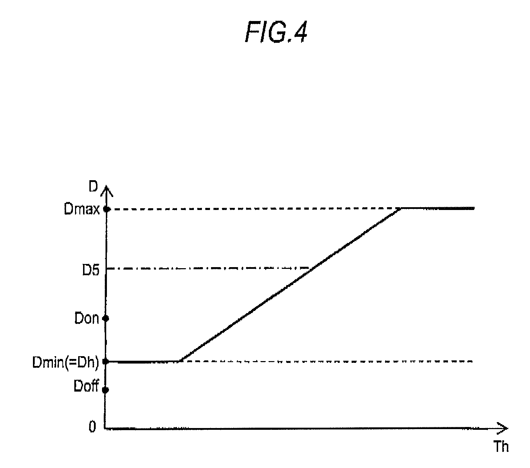

Next, ventilation control which is performed by the controller 15 will be described. The controller 15 controls the ventilation fan 42 to perform ventilation of the inside of the housing 10a at times of the start-up operation, the generation operation, and the suspension operation. The ventilation fan 42 is driven under PWM control. The controller 15 sets a control command value (number of revolutions) of the ventilation fan 42 by using a duty ratio D in the PWM control and outputs the control command value to a driver circuit (not illustrated) of the ventilation fan 42. As illustrated in Fig. 4, the duty ratio D which is output to the ventilation fan 42 is determined in accordance with the temperature Th which is detected by the temperature sensor 17. Specifically, as the temperature Th becomes higher, the duty ratio D is set to become greater. Thus, as the quantity of drive of the ventilation fan 42 increases, the temperature Th becomes lower. The duty ratio D is set to a value between the minimum duty ratio Dmin (corresponding to the minimum control command value in the appended claims) and the maximum duty ratio Dmax. The maximum duty ratio Dmax may be set to 100%, for example.

As illustrated in Fig. 3, the controller 15 sets the minimum duty ratio Dmin (which will be described later) such that the minimum flow rate Qmin of fluid which flows in the throttle tube 61a due to the minimum quantity of drive of the ventilation fan 42 corresponding to the minimum duty ratio Dmin is greater than the second flow rate Q2. The second flow rate Q2 is set to be larger than a predetermined discharge flow rate Qx. The predetermined discharge flow rate Qx corresponds to the maximum flow rate among flow rates Q of fluid having an extent that the fluid is combustible for example, when fuel flows out from the fuel cell module 11 into the housing 10a and thus the fluid contains the fuel during the ventilation control of the controller 15. In other words, when there is an ignition source in a case where the fluid contains the fuel, the predetermined discharge flow rate Qx is a flow rate Q corresponding to the minimum fuel concentration among fuel concentrations having an extent that the fluid is combustible. That is, when the fluid contains the fuel and the flow rate Q is equal to or lower than the predetermined discharge flow rate Qx, if the ignition source exists, the fluid is combusted. When the flow rate Q is larger than the predetermined discharge flow rate Qx, even though the ignition source exists, the fluid is not combusted.

The controller 15 suspends an operation of the fuel cell system, for example, when a pressure loss in the housing 10a becomes larger and the flow rate Q becomes equal to or lower than the second flow rate Q2, and thus the output of the flow state detection switch 60 which is the ON signal changes to the OFF signal. In this manner, the flow rate Q becomes larger than the second flow rate Q2 under the ventilation control. Since the second flow rate Q2 is larger than the predetermined discharge flow rate Qx, fuel concentration of fluid which is discharged from the chimney portion 53 is equal to or lower than fuel concentration in which the fluid is incombustible, under the ventilation control.

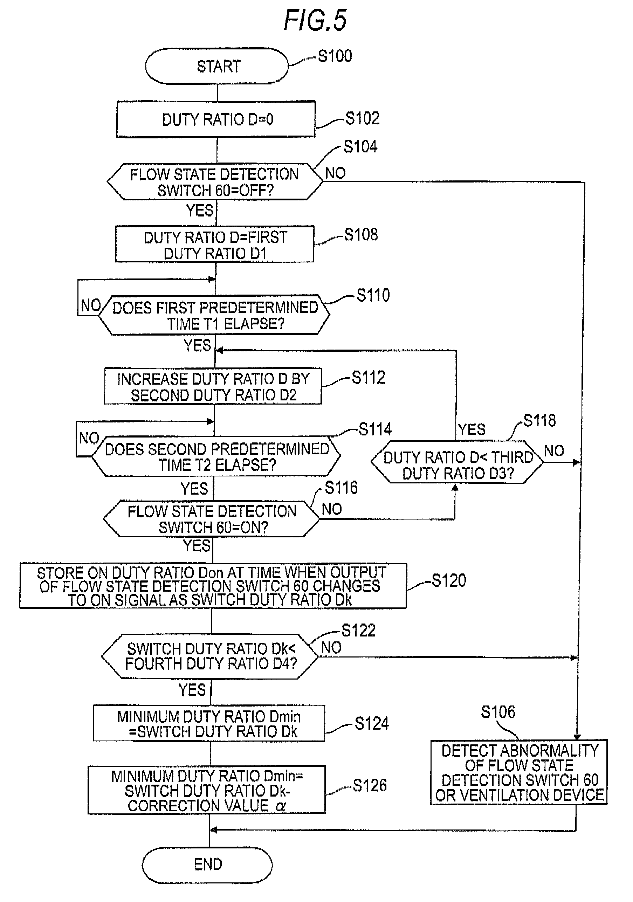

Next, control of the controller 15 setting the minimum duty ratio Dmin in the above-described fuel cell system will be described using a flowchart illustrated in Fig. 5. When an operation is started by pressing the start switch, and the like, the controller 15 executes a process of the flowchart illustrated in Fig. 5 before the start-up operation starts. Since the process is executed before the fuel cell system starts the start-up operation, the combustion exhaust gas is not discharged, and thereby fluid which flows in the duct for ventilation and exhaust 51, that is, fluid which flows in the throttle tube 61 a contains only the air of ventilation or exhaust.

The controller 15 outputs the duty ratio D which is set to 0% in a state where combustion exhaust gas is not discharged (Step S102). At this time, since the ventilation fan 42 does not generate the air of ventilation or exhaust, the flow rate Q of fluid is zero. In Step S104, the controller 15 checks whether or not an output of the flow state detection switch 60 is the OFF signal. When the output of the flow state detection switch 60 is the ON signal, the controller 15 determines "NO" in Step S104 and detects abnormality of the flow state detection switch 60 (Step S106). In this case, for example, the controller 15 warns a user and then suspends an operation of the fuel cell system. When the output of the flow state detection switch 60 is the OFF signal, the controller 15 determines that incorrect detection of the flow state detection switch 60 does not occur and determines "YES" in Step S104. The controller 15 outputs a first duty ratio D1 (Step S108). The first duty ratio D1 is a duty ratio D which is sufficiently smaller than a duty ratio D corresponding to the second flow rate Q2. The first duty ratio D1 may be 25%, for example.

The controller 15 determines whether or not a first predetermined time T1 elapses (Step S110). The first predetermined time T1 is a time (for example, 60 seconds) from when the controller 15 outputs the first duty ratio D1 to the ventilation fan 42 until a flow of fluid is stable at the flow rate Q. When the first predetermined time T1 does not elapse, the controller 15 repeats determination of "NO" in Step S110. When the first predetermined time T1 elapses, the controller 15 determines "YES" in Step S110 and causes a program to proceed to Step S112.

The controller 15 increases the duty ratio D by a second duty ratio D2 in Step S112. The second duty ratio D2 may be 5%, for example. The controller 15 determines whether or not a second predetermined time T2 elapses (Step S114). The second predetermined time T2 is a time (for example, 15 seconds) from when the controller 15 outputs the second duty ratio D2 to the ventilation fan 42 until a flow of fluid is stable at the flow rate Q. When the second predetermined time T2 does not elapse, the controller 15 repeats determination of "NO" in Step S114. When the second predetermined time T2 elapses, the controller 15 determines "YES" in Step S114 and determines whether or not the output of the flow state detection switch 60 is the ON signal (Step S116).

When the flow state detection switch 60 outputs the OFF signal, the controller 15 determines "NO" in Step S116 and determines whether or not the duty ratio D is smaller than a third duty ratio D3 (Step S118). The third duty ratio D3 is a duty ratio D which is relatively close to the maximum duty ratio Dmax and is equal to or greater than the duty ratio D. The third duty ratio D3 may be 100%, for example. When the chimney portion 53 becomes in a state close to blockage, and thus a pressure loss becomes relatively large, although the ventilation fan 42 is driven at the third duty ratio D3 which is relatively close to the maximum duty ratio Dmax and is equal to or greater than the duty ratio D, the output of the flow state detection switch 60 is the OFF signal. Thus, when the duty ratio D is equal to or greater than the third duty ratio D3, the controller 15 determines "NO" in Step S118 and detects abnormality of a ventilation device which is configured by the ventilation fan 42 and the ducts 51 and 52 (Step S106). When the duty ratio D is smaller than the third duty ratio D3, the controller 15 determines "YES" in Step S118 and causes the program to return to Step S112.

The controller 15 determines "NO" in Step S116 until the output of the flow state detection switch 60 is the ON signal. The controller 15 repeats the above-described processes of Steps S112 to S118 so as to increase the duty ratio D. When the duty ratio D increases and thus the output of the flow state detection switch 60 which is the OFF signal changes to the ON signal, the controller 15 determines "YES" in Step S116 and stores an ON duty ratio Don (corresponding to the ON control command value in the appended claims) which is a duty ratio D at a time when the output of the flow state detection switch 60 is switched to the ON signal, as a switch duty ratio Dk (corresponding to the switch control command value in the appended claims) (storage unit: Step S120).

The controller 15 checks whether or not the switch duty ratio Dk (that is, ON duty ratio Don) is smaller than a fourth duty ratio D4 (Step S122). The fourth duty ratio D4 is a duty ratio D which is sufficient for switching the output of the flow state detection switch 60 from the OFF signal to the ON signal even when aged deterioration of the ventilation fan 42 is considered. The fourth duty ratio D4 may be 50%, for example. When the switch duty ratio Dk is equal to or greater than the fourth duty ratio D4, the controller 15 determines that the quantity of drive at a predetermined duty ratio D is relatively greatly reduced due to, for example, a problem in the flow state detection switch 60 or aged deterioration of the ventilation fan 42, and determines "NO" in Step S122. The controller 15 detects abnormality of the ventilation device which is configured by the ventilation fan 42 and the ducts 51 and 52 (Step S106).

When the switch duty ratio Dk is smaller than the fourth duty ratio D4, the controller 15 sets the minimum duty ratio Dmin based on the switch duty ratio Dk (setting unit: Step S124). Specifically, the minimum duty ratio Dmin is set to a duty ratio D having the same value as the switch duty ratio Dk. The controller 15 corrects the minimum duty ratio Dmin (correction unit: Step S126). Specifically, the controller 15 subtracts a correction value α from the minimum duty ratio Dmin (switch duty ratio Dk) which is set in Step S124. The correction value α is set considering the hysteresis characteristics which are possessed by the flow state detection switch 60. A relationship of the hysteresis characteristics of the flow state detection switch 60 and the duty ratio D is calculated by performing measurement through an experiment in advance. Specifically, as illustrated in Fig. 3, the correction value α is set to approach as close as possible to an OFF duty ratio Doff (corresponding to the OFF control command value in the appended claims) which is a duty ratio D which causes the output of the flow state detection switch 60 to be switched from the ON signal to the OFF signal, from the switch duty ratio Dk which is set as the minimum duty ratio Dmin.

Next, an operation of the fuel cell system when the minimum duty ratio Dmin is set, which is performed along the above-described flowchart in a case where incorrect detection of the flow state detection switch 60 does not occur, or in a case where the quantity of drive is relatively small reduced due to aged deterioration of the ventilation fan 42 will be described with reference to Fig. 3. As described above, the minimum duty ratio Dmin is set before the fuel cell system starts the start-up operation. Thus, the combustion exhaust gas is not discharged and the flow rate Q of fluid which flows in the duct for ventilation and exhaust 51, that is, fluid which flows in the throttle tube 61a is a flow rate of fluid which contains only the air of ventilation or exhaust. The flow rate Q of the fluid is illustrated in Fig. 3.

When the controller 15 outputs a duty ratio D of zero to the ventilation fan 42 (Step S112), the quantity of drive of the ventilation fan 42 is zero and thus the flow rate Q is zero which is sufficiently smaller than the second flow rate Q2. Thus, the output of the flow state detection switch 60 is the OFF signal, and thus the ventilation fan 42 is driven with the first duty ratio D1 (Step S108). When the ventilation fan 42 is driven at the first duty ratio D1 and the air of ventilation or exhaust is generated, since the flow rate Q is sufficiently smaller than the second flow rate Q2, the output of the flow state detection switch 60 maintains the OFF signal. The duty ratio D gradually increases from the first duty ratio D1 (Step S112 to S118) and an ON duty ratio Don when the output of the flow state detection switch 60 is switched from the OFF signal to the ON signal is stored as the switch duty ratio Dk in the controller 15 (Step S120). The flow rate Q when the ventilation fan 42 is driven at the ON duty ratio Don corresponds to the first flow rate Q1.

The ON duty ratio Don is set to the minimum duty ratio Dmin (Step S124) and is corrected so as to approach the OFF duty ratio Doff by using the correction value α (Step S126). Thus, the minimum duty ratio Dmin is set to a correction duty ratio Dh between the ON duty ratio Don and the OFF duty ratio Doff.

When the flow state detection switch 60 performs incorrect detection, when the chimney portion 53 becomes in the state close to blockage, or when quantity of drive by the predetermined duty ratio D is relatively greatly reduced due to aged deterioration of the ventilation fan 42, and the like, the controller 15 detects abnormality of the flow state detection switch 60 or the ventilation device (Step S106).

A case of setting the minimum duty ratio Dmin will be described in a case where this embodiment is not applied. As in this embodiment, when the minimum duty ratio Dmin is not set in an operation of the fuel cell system, it is necessary that a fifth duty ratio D5 is set as the minimum duty ratio Dmin in advance considering reduction in quantity of drive of the ventilation fan 42, and the like due to aged deterioration, as illustrated in Fig. 4. The fifth duty ratio D5 is relatively greater than the ON duty ratio Don.

According to this embodiment, the fuel cell system includes the fuel cell 34 that generates electricity by using fuel and an oxidant gas, the housing 10a that stores the fuel cell 34, the ventilation fan 42 that causes the inside of the housing 10a to be ventilated, the flow state detection switch 60 that is arranged on a flow path of fluid which flows due to ventilation, and outputs an ON signal if the fluid flows and outputs an OFF signal if the fluid does not flow, when the ventilation fan 42 causes the inside of the housing 10a to be ventilated, and the controller 15 that controls at least the ventilation fan 42. The controller 15 includes the storage unit (Step S120) and the setting unit (Step S124). The storage unit stores the ON duty ratio Don of the ventilation fan 42 corresponding to quantity of drive when the output of the flow state detection switch 60 is switched from the OFF signal to the ON signal, as the switch duty ratio Dk by increasing quantity of drive of the ventilation fan 42 from quantity of drive of the ventilation fan 42 when the output of the flow state detection switch 60 is the OFF signal. The setting unit sets the minimum duty ratio Dmin of the ventilation fan 42 based on the switch duty ratio Dk which is stored in the storage unit.

According to this configuration, the controller 15 sets the minimum duty ratio Dmin of the ventilation fan 42 based on the ON duty ratio Don which is stored as the switch duty ratio Dk in the storage unit. For this reason, it is possible to cause the minimum duty ratio Dmin of the ventilation fan 42 to be the same as the ON duty ratio Don corresponding to quantity of drive when the output of the flow state detection switch 60 is switched from the OFF signal to the ON signal, or to approach as close as possible to the ON duty ratio Don. Thus, it is possible to reduce quantity of drive of the ventilation fan 42 (corresponding to the fifth duty ratio D5) which is relatively greatly set in the case where this embodiment is not applied, and it is possible to relatively reduce power consumption of the ventilation fan 42. Accordingly, it is possible to reduce the amount of power consumed by the fuel cell system.

The ON duty ratio Don corresponding to the first flow rate Q1 when the output of the flow state detection switch 60 is switched from the OFF signal to the ON signal is different for each fuel cell system due to an individual difference between ventilation fans 42 in quantity of drive or an individual difference between housings 10a in pressure loss, and the like. In this case, since the minimum duty ratio Dmin of a ventilation fan 42 which is appropriate for each fuel cell system may also be set, it is possible to appropriately reduce the amount of consumed power for each fuel cell system.

The storage unit performs storing before the start-up operation of the fuel cell system starts, and the setting unit performs setting based on the ON duty ratio Don which is stored as the switch duty ratio Dk in the storage unit.

According to this configuration, the setting unit sets the minimum duty ratio Dmin of the ventilation fan 42 based on the ON duty ratio Don which is stored as the switch duty ratio Dk in the storage unit, before the start-up operation of the fuel cell system starts. Before the start-up operation of the fuel cell system, for example, since the combustion exhaust gas is not discharged, the flow rate of the combustion exhaust gas does not have an influence on an operation of the flow state detection switch 60 and the minimum duty ratio Dmin of the ventilation fan 42 is set. Accordingly, it is possible to set the minimum duty ratio Dmin of the ventilation fan 42 with high accuracy.

In a case before the start-up operation of the fuel cell system starts, the duty ratio D of the ventilation fan 42 is zero and the output of the flow state detection switch 60 is the OFF signal. In this case, the controller 15 may switch the output of the flow state detection switch 60 from the OFF signal to the ON signal by increasing the duty ratio D of the ventilation fan 42 at this time from zero. Thus, the controller 15 increases the duty ratio D of the ventilation fan 42 and then decreases the duty ratio D, and thus it is possible to switch the output of the flow state detection switch 60 for a period of time which is relatively shorter than that when the output of the flow state detection switch 60 is switched from the ON signal to the OFF signal. Accordingly, it is possible to set the minimum duty ratio Dmin of the ventilation fan 42 for a relatively short period of time.

The switch duty ratio Dk includes the ON duty ratio Don when the output of the flow state detection switch 60 is switched from the OFF signal to the ON signal, and the OFF duty ratio Doff when the output of the flow state detection switch 60 is switched from the ON signal to the OFF signal. The flow state detection switch 60 has the hysteresis characteristics which cause the first flow rate Q1 of fluid corresponding to the ON duty ratio Don to be greater than the second flow rate Q2 of fluid corresponding to the OFF duty ratio Doff. The controller 15 further includes a correction unit (Step S126) that corrects the minimum duty ratio Dmin of the ventilation fan 42 which is set by the setting unit, considering the hysteresis characteristics.

According to this configuration, the correction unit may correct the minimum value of the duty ratio D of the ventilation fan 42, which is set to approach as close as possible to the ON duty ratio Don corresponding to the first flow rate Q1 by the setting unit, based on the hysteresis characteristics which are possessed by the flow state detection switch 60 such that the minimum value of the duty ratio D approaches as close as possible to the OFF duty ratio Doff corresponding to the second flow rate Q2 which is smaller than the first flow rate Q1. Thus, it is possible to appropriately reduce quantity of drive of the ventilation fan 42, and to appropriately reduce power consumption of the ventilation fan 42. Accordingly, it is possible to appropriately reduce the amount of power consumed by the fuel cell system.

Next, a second embodiment of the fuel cell system disclosed here will be described focusing on differences with the first embodiment.

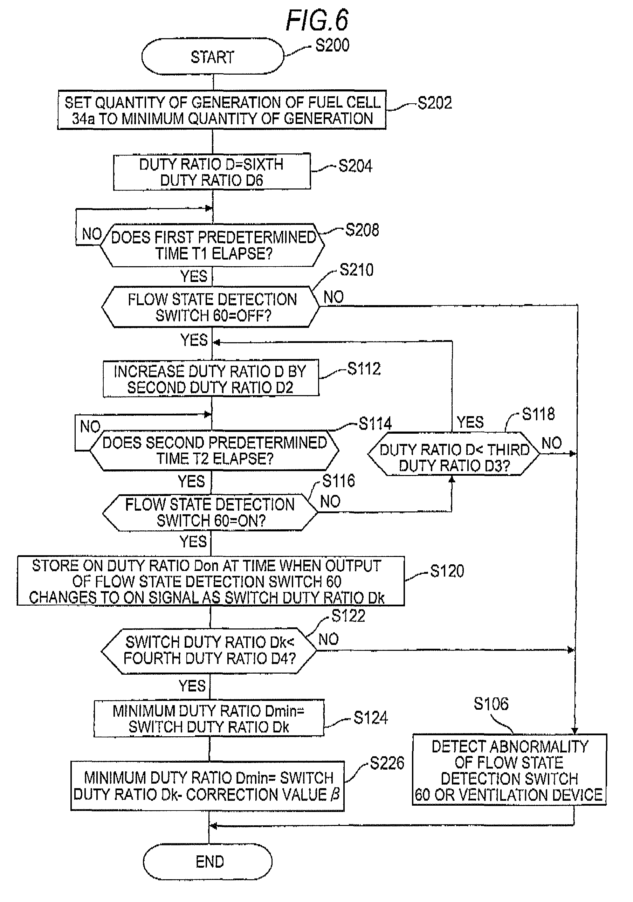

In the first embodiment, the controller 15 sets the minimum duty ratio Dmin before the start-up operation of the fuel cell system is started. On the contrary, in the second embodiment, the controller 15 periodically executes processes of a flowchart illustrated in Fig. 6 (for example, each 96 hours from a start time of the generation operation) in the start-up operation, the generation operation, or the suspension operation of the fuel cell system. The same details as those in the first embodiment are denoted by the same reference signs as those in the first embodiment. When the fuel cell system is in the generation operation, since the combustion exhaust gas is discharged, fluid which is detected by the flow state detection switch 60 contains a mixture of the air of ventilation or exhaust and the combustion exhaust gas in the second embodiment. That is, the flow rate Q illustrated in Fig. 3 is a flow rate obtained by combining the flow rate of the air of ventilation or exhaust and the flow rate of the combustion exhaust gas.

The controller 15 sets quantity of generation of the fuel cell 34 to the minimum quantity of generation (Step S202). When the quantity of generation of the fuel cell 34 is the minimum quantity of generation, the flow rate of the combustion exhaust gas which flows in the throttle tube 61a becomes the third flow rate Q3 which is sufficiently smaller than the second flow rate Q2. The third flow rate Q3 is measured in advance through an experiment and the like and is stored in the controller 15. The controller 15 outputs a sixth duty ratio D6 to the ventilation fan 42 (Step S204). The sixth duty ratio D6 is a duty ratio D which causes the flow rate Q to be a flow rate which is sufficiently smaller than the second flow rate Q2. The flow rate Q is obtained by combining the third flow rate Q3 and the flow rate of the air of ventilation or exhaust which corresponds to quantity of drive of the ventilation fan 42 corresponding to the sixth duty ratio D6. The sixth duty ratio D6 may be 15%, for example. The controller 15 determines whether or not the first predetermined time T1 elapses (Step S208). When the first predetermined time T1 does not elapse, the controller 15 determines "NO" in Step S208 and repeats the process. When the first predetermined time T1 elapses, the controller 15 determines "YES" in Step S208 and causes the program to proceed to Step S210. At this time, since the ventilation fan 42 is driven at the sixth duty ratio D6, the flow rate Q is sufficiently smaller than the second flow rate Q2.

The controller 15 determines whether or not the output of the flow state detection switch 60 is the OFF signal, in Step 5210. Although the flow rate Q is sufficiently smaller than the second flow rate Q2, when the output of the flow state detection switch 60 is the ON signal, the controller 15 determines "NO" in Step S210 and detects abnormality of the flow state detection switch 60 (Step S106). When the output of the flow state detection switch 60 is the OFF signal, the controller 15 determines that the flow state detection switch 60 has no problem and determines "YES" in Step S210. Then, the controller 15 causes the program to proceed to Step S112. The controller 15 executes processes of Steps S112 to S124 and thereby sets the minimum duty ratio Dmin (setting unit: Step S124), similarly to the first embodiment. In the second embodiment, since the combustion exhaust gas is discharged at the third flow rate Q3, the flow rate of the air of ventilation or exhaust by the ventilation fan 42 when the flow rate Q is the first flow rate Q1, corresponds to (that is, Q1=Q3+Q4) a fourth flow rate Q4 which is smaller than the first flow rate Q1 by the third flow rate Q3, as illustrated in Fig. 3. Thus, in the second embodiment, the ON duty ratio Don corresponds to a seventh duty ratio D7 which causes the air of ventilation or exhaust to have the fourth flow rate Q4.

As illustrated in Fig. 6, the controller 15 corrects the minimum duty ratio Dmin in Step S226 (correction unit: Step S226). In the first embodiment, the controller 15 corrects the minimum duty ratio Dmin by using the correction value α in Step S126 (correction unit). On the contrary, in the second embodiment, the controller 15 subtracts a correction value β from the minimum duty ratio Dmin and thus corrects the minimum duty ratio Dmin (correction unit: Step S226). The correction value β is determined considering the hysteresis characteristics which are possessed by the flow state detection switch 60. Specifically, the correction value β is set to perform correction to a duty ratio D which is caused to approach the OFF duty ratio Doff from the seventh duty ratio D7 which is set as the minimum duty ratio Dmin. Similarly to in the first embodiment, when the corrected duty ratio D is set as a correction duty ratio Dh, the correction value β is set to be smaller than the correction value α by the duty ratio D corresponding to the third flow rate Q3. In this manner, when the combustion exhaust gas is not discharged in the generation operation, the ventilation fan 42 is also controlled by setting the correction value β such that the flow rate Q which is equal to or greater than the second flow rate Q2 is ensured by only the flow rate of the air of ventilation or exhaust.

In the above-described first embodiment, for example, when the fuel cell system continuously performs the generation operation for a long period of time, even though the controller 15 outputs a duty ratio D of the same value to the ventilation fan 42, quantity of drive may be reduced due to deterioration of the ventilation fan 42, and the like, and the output of the flow state detection switch 60 may be the OFF signal. That is, although the ventilation fan 42 operates, the flow state detection switch 60 may perform incorrect detection.

On the contrary, in the second embodiment, the storage unit periodically performs storing in the start-up operation, the generation operation, or the suspension operation of the fuel cell system and the setting unit performs setting based on the ON duty ratio Don which is stored as the switch duty ratio Dk in the storage unit.

According to this configuration, the setting unit periodically sets the minimum duty ratio Dmin of the ventilation fan 42 based on the ON duty ratio Don which is stored as the switch duty ratio Dk in the storage unit. For this reason, the minimum duty ratio Dmin of the ventilation fan 42 is periodically updated based on the ON duty ratio Don corresponding to quantity of drive of the ventilation fan 42 at a time when the setting unit performs setting. Thus, when the fuel cell system performs an operation for a long period of time, it is also possible to suppress incorrect detection of the flow state detection switch 60 regardless of an operation of the ventilation fan 42.

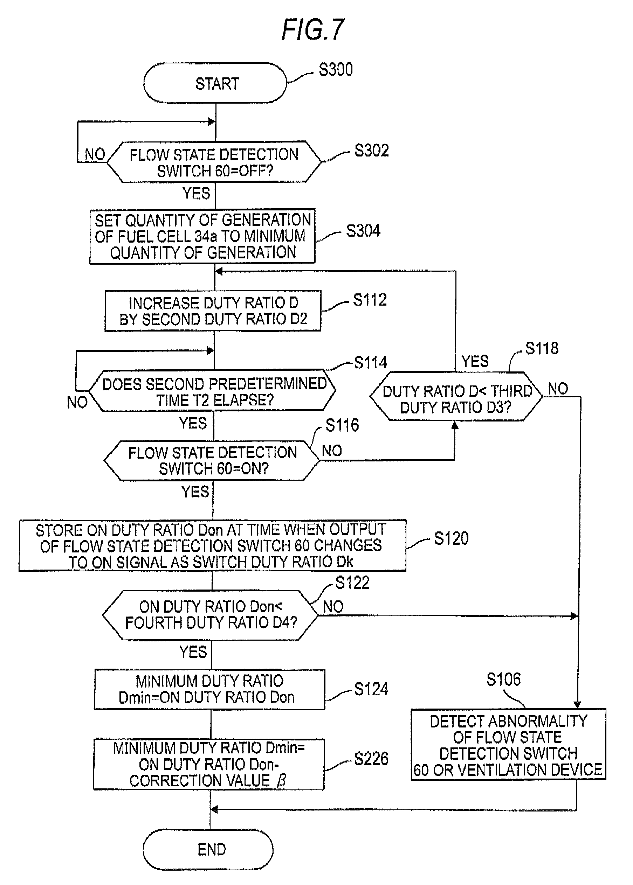

Next, a modification example of the second embodiment of the fuel cell system disclosed here will be described focusing on different parts from those in the second embodiment with reference to Fig. 7. The same details as those in the second embodiment are denoted by the same reference signs as those in the second embodiment.

In the second embodiment, the minimum duty ratio Dmin is periodically set in the start-up operation, the generation operation, or the suspension operation. However, in this embodiment, the minimum duty ratio Dmin is set when the output of the flow state detection switch 60 is switched from the ON signal to the OFF signal under the ventilation control in the start-up operation, the generation operation, or the suspension operation of the fuel cell system.

The controller 15 determines whether or not the output of the flow state detection switch 60 is the OFF signal, under the ventilation control (Step S302). When the output of the flow state detection switch 60 is the ON signal, the controller 15 determines "NO" in Step S302 and continues to perform ventilation control. For example, when the chimney portion 53 becomes in the state close to blockage and the flow rate Q becomes smaller than the second flow rate Q2, and thus the output of the flow state detection switch 60 changes to the OFF signal from the ON signal, the controller 15 determines "YES" in Step S302 and sets quantity of generation of the fuel cell 34 as the minimum quantity of generation (Step S304). The controller 15 causes the program to proceed to Step S112. Subsequent processes from Step S112 are similar to those in the second embodiment.

According to the modification example, the storage unit performs storing when the output of the flow state detection switch 60 changes to the OFF signal from the ON signal in the start-up operation, the generation operation, or the suspension operation of the fuel cell system, and the setting unit performs setting based on the ON duty ratio Don which is stored as the switch duty ratio Dk in the storage unit.

According to this configuration, the setting unit sets the minimum duty ratio Dmin of the ventilation fan 42 based on the ON duty ratio Don which is stored as the switch duty ratio Dk in the storage unit when the output of the flow state detection switch 60 changes to the OFF signal from the ON signal in the start-up operation, the generation operation, or the suspension operation of the fuel cell system. Thus, it is also possible to update the minimum duty ratio Dmin of the ventilation fan 42 with relative convenience when the fuel cell system performs an operation for a long period of time.

In a case where the output of the flow state detection switch changes to the OFF signal from the ON signal in the start-up operation, the generation operation, or the suspension operation of the fuel cell system, quantity of drive of the ventilation fan may become relatively small and thus the flow state detection switch outputs the OFF signal. In this case, the storage unit increases a duty ratio D of the ventilation fan 42 from the duty ratio D at this time, and thus the output of the flow state detection switch 60 may be switched from the OFF signal to the ON signal. Thus, it is possible to switch the output of the flow state detection switch 60 for a relatively short period of time, compared to a case where the storage unit increases the duty ratio D of the ventilation fan 42 and then reduces the duty ratio D, and thus the output of the flow state detection switch 60 is switched from the ON signal to the OFF signal. Accordingly, it is possible to set the minimum duty ratio Dmin of the ventilation fan 42 for a relatively short period of time.

A case where wind is sucked from the outside of the housing 10a into the duct for ventilation and exhaust 51 through the inner pipe 53a of the chimney portion 53 under the ventilation control of the controller 15 and the flow rate Q temporarily becomes smaller than the second flow rate Q2, and thus the output of the flow state detection switch 60 changes to the OFF signal is considered. Since it is also possible to update the minimum duty ratio Dmin of the ventilation fan 42 with relative convenience in such a case, it is possible to suppress detection that the flow state detection switch 60 or the ventilation device is abnormal, due to temporary variation of the flow rate Q.

The above-described embodiments are examples of the fuel cell system and this disclosure is not limited to these embodiments. This disclosure may employ other configurations. For example, the storage unit stores the ON duty ratio Don as the switch duty ratio Dk. However, instead of this, the storage unit may store the OFF duty ratio Doff as the switch duty ratio Dk. That is, the storage unit stores the OFF duty ratio Doff of the ventilation fan 42 as the switch duty ratio Dk. The OFF duty ratio Doff of the ventilation fan 42 corresponds to quantity of drive when the output of the flow state detection switch 60 is switched from the ON signal to the OFF signal by reducing quantity of drive of the ventilation fan 42 from the quantity of drive of the ventilation fan 42 which causes the output of the flow state detection switch 60 to be the ON signal.

Similarly to the above-described embodiments, when the setting unit sets the minimum duty ratio Dmin to the same value as the switch duty ratio Dk which is stored in the storage unit, the OFF duty ratio Doff is set as the minimum duty ratio Dmin in this embodiment. Since the OFF duty ratio Doff is a duty ratio D which is smaller than the ON duty ratio Don set as the minimum duty ratio Dmin in the above-described embodiments, the setting unit may set the minimum duty ratio Dmin to be smaller than the minimum duty ratio Dmin in the above-described embodiments. Thus, it is possible to much more reduce quantity of drive of the ventilation fan 42, and to much more reduce the amount of power consumed by the fuel cell system.

In this manner, the storage unit stores a duty ratio D of the ventilation fan 42 which corresponds to quantity of drive of the ventilation fan 42 when the output of the flow state detection switch 60 is switched by controlling quantity of drive of the ventilation fan 42, as the switch duty ratio Dk.

In the above-described embodiments, the setting unit sets the minimum duty ratio Dmin to the same value as the switch duty ratio Dk. However, instead of this, the setting unit may set the minimum duty ratio Dmin to a duty ratio D of a value different from the switch duty ratio Dk. For example, the controller 15 may set the minimum duty ratio Dmin to a duty ratio D of a value which is obtained by adding a duty ratio D corresponding to reduced quantity of drive of the ventilation fan 42 due to, for example, aged deterioration, to the switch duty ratio Dk.

In the above-described embodiments, the correction unit performs correction by subtracting the correction value α (or correction value β) from the minimum duty ratio Dmin such that a duty ration approaches the OFF duty ratio Doff. However, instead of this, the correction unit may perform correction by increasing the minimum duty ratio Dmin. For example, when reduced quantity of drive of the ventilation fan 42 due to aged deterioration is understood in advance, the controller 15 corrects the minimum duty ratio Dmin so as to increase the minimum duty ratio Dmin by a duty ratio D corresponding to the reduced quantity of drive.

In the above-described embodiments, the first predetermined time T1 and the second predetermined time T2 are set to be different from each other. However, instead of this, the first predetermined time T1 and the second predetermined time T2 may be set to the time of the same value.

In the above-described embodiments, the check valve 41 is arranged in the intake port 10c and the ventilation fan 42 is arranged in the exhaust port for ventilation 10d. However, instead of this, the ventilation fan 42 may be arranged in the intake port 10c and the check valve 41 may be arranged in the exhaust port for ventilation 10d. The fuel cell system may include a plurality of ventilation fans 42 and the ventilation fans 42 may be arranged in the intake port 10c and the exhaust port for ventilation 10d.

The pressure introducing portion 61 of the flow state detection switch 60 is arranged in the duct for ventilation and exhaust 51. However, instead of this, the pressure introducing portion 61 may be arranged on a flow path in which the outside air flows in the exhaust duct room R2, or on a flow path in which fluid flows in the housing 10a when ventilation is performed.

In the above-described embodiments, the flow state detection switch 60 is a switch into which the dynamic pressure and the static pressure of fluid are introduced and which causes an output to be switched based on a difference between the total pressure and the static pressure. However, instead of this, the flow state detection switch 60 may be a switch which detects the flow rate Q of fluid and causes the output to be switched based on the detected flow rate Q of the fluid.

The principles, preferred embodiment and mode of operation of the present invention have been described in the foregoing specification. However, the invention which is intended to be protected is not to be construed as limited to the particular embodiments disclosed. Further, the embodiments described herein are to be regarded as illustrative rather than restrictive.

## Claims

1. A fuel cell system comprising:
a fuel cell (34) that generates electricity by using fuel and an oxidant gas;
a housing (10a) that stores the fuel cell;
a ventilation fan (42) that causes an inside of the housing to be ventilated;
a flow state detection switch (60) that is arranged on a flow path of fluid which flows due to ventilation,
a controller (15) that controls at least the ventilation fan,
wherein the controller controls quantity of drive of the ventilation fan,
**characterized in that** the flow state detection switch (60) outputs an ON signal if the fluid flows and outputs an OFF signal if the fluid does not flow, when the ventilation fan causes the inside of the housing to be ventilated and the controller includes a storage unit that stores a control command value of the ventilation fan as a switch control command value, the control command value of the ventilation fan corresponding to the quantity of drive of the ventilation fan when an output of the flow state detection switch is switched, and a setting unit that sets the minimum control command value of the ventilation fan based on the switch control command value stored in the storage unit.

2. The fuel cell system according to claim 1, wherein
before a start-up operation of the fuel cell system is started,
the storage unit performs storing, and
the setting unit performs setting based on the switch control command value which is stored in the storage unit.

3. The fuel cell system according to claim 1 or 2, wherein
the storage unit performs storing periodically during a start-up operation, a generation operation, or a suspension operation of the fuel cell system, and
the setting unit performs setting based on the switch control command value which is stored in the storage unit.

4. The fuel cell system according to any one of claims 1 to 3, wherein
the storage unit performs storing when the output of the flow state detection switch which is the ON signal changes to the OFF signal during a start-up operation, a generation operation, or a suspension operation of the fuel cell system, and
the setting unit performs setting based on the switch control command value which is stored in the storage unit.

5. The fuel cell system according to any one of claims 1 to 4, wherein
the switch control command value is a control command value of the ventilation fan
corresponding to quantity of drive of the ventilation fan when the output of the flow state detection switch which is the OFF signal changes to the ON signal.

6. The fuel cell system according to any one of claims 1 to 5, wherein
the switch control command value has an ON control command value and an OFF control command value, the ON control command value being a value when the output of the flow state detection switch is switched from the OFF signal to the ON signal and the OFF control command value being a value when the output of the flow state detection switch is switched from the ON signal to the OFF signal,
the flow state detection switch has hysteresis characteristics which cause a first flow rate of the fluid corresponding to the ON control command value to be higher than a second flow rate of the fluid corresponding to the OFF control command value, and
the controller further includes a correction unit that corrects the minimum control command value of the ventilation fan which is set by the setting unit, considering the hysteresis characteristics.

## Patentansprüche

1. Brennstoffzellensystem umfassend:
eine Brennstoffzelle (24), die durch Verwendung von Brennstoff und Oxidationsgas Elektrizität erzeugt;
ein Gehäuse (10a), das die Brennstoffzelle aufnimmt;
einen Ventilatorgebläse (42), das bewirkt, dass ein Inneres des Gehäuses ventiliert wird;
einen Schalter zum Erkennen des Strömungszustands (60), der an einem Strömungspfad des Fluides angeordnet ist, welches aufgrund der Ventilation fließt;
eine Steuerung (15), die mindestens das Ventilatorgebläse steuert, wobei die Steuerung den Antriebsumfang des Ventilatorgebläses steuert, **dadurch gekennzeichnet, dass**
der Schalter zum Erkennen des Strömungszustandes (60) ein AN-Signal ausgibt, falls das Fluid fließt, und ein AUS-Signal ausgibt, falls das Fluid nicht fließt, wenn das Ventilatorgebläse bewirkt, dass das Innere des Gehäuses ventiliert wird, und die Steuerung eine Speichereinheit beinhaltet, die einen Steuerbefehlswert des Ventilatorgebläses als einen Schaltersteuerbefehlswert speichert, wobei der Steuerbefehlswert des Ventilatorgebläses dem Antriebsumfang des Ventilatorgebläses entspricht, wenn ein Ausgang des Schalters zum Erkennen des Strömungszustandes geschaltet wird, und eine Einstelleinheit, die den Mindeststeuerbefehlswert des Ventilatorgebläses basierend auf den in der Speichereinheit gespeicherten Änderungssteuerbefehlswert einstellt.

2. Brennstoffzellensystem nach Anspruch 1, wobei
bevor ein Einschaltbetrieb des Brennstoffzellensystems gestartet wird, die Speichereinheit eine Speicherung durchführt und die Einstelleinheit eine Einstellung basierend auf dem Schaltersteuerbefehlswert durchführt, der in der Speichereinheit gespeichert ist.

3. Brennstoffzellensystem nach Anspruch 1 oder 2, wobei
die Speichereinheit regelmäßig eine Speicherung während eines Einschaltbetriebes, eines Erzeugungsbetriebes oder eines Aussetzungsbetriebes des Brennstoffzellensystems durchführt, und
die Einstelleinheit eine Einstellung basierend auf dem Schaltersteuerbefehlswert durchführt, der in der Speichereinheit gespeichert ist.

4. Brennstoffzellensystem nach einem der Ansprüche 1 bis 3, wobei
die Speichereinheit eine Speicherung durchführt, wenn das das AN-Signal als Ausgang des Schalters zum Erkennen des Strömungszustandes zum AUS-Signal während eines Einschaltbetriebes, eines Erzeugungsbetriebes oder eines Aussetzungsbetriebes des Brennstoffzellensystems wechselt, und
die Einstelleinheit eine Einstellung basierend auf dem Schaltersteuerbefehlswert durchführt, der in der Speichereinheit gespeichert ist.

5. Brennstoffzellensystem nach einem der Ansprüche 1 bis 4, wobei
der Schaltersteuerbefehlswert ein Steuerbefehlswert des Ventilatorgebläses entsprechend dem Antriebsumfang des Ventilatorgebläses ist, wenn der Ausgang des Schalters zum Erkennen des Strömungszustandes, welcher das AUS-Signal ist, auf das AN-Signal wechselt.

6. Brennstoffzellensystem nach einem der Ansprüche 1 bis 5, wobei der Schaltersteuerbefehlswert einen AN-Steuerbefehlswert und einen AUS-Steuerbefehlswert aufweist, wobei der AN-Steuerbefehlswert ein Wert ist, wenn der Ausgang des Schalters zum Erkennen des Strömungszustandes von dem AUS-Signal auf das AN-Signal wechselt, und der AUS-Steuerbefehlswert ein Wert ist, wenn der Ausgang des Schalters zum Erkennen des Strömungszustandes von dem AN-Signal auf das AUS-Signal wechselt,
der Schalter zum Erkennen des Strömungszustandes Hystereseeigenschaften aufweist, welche eine erste Strömungsrate des Fluides entsprechend dem AN-Steuerbefehlswert veranlasst größer zu sein als eine zweite Strömungsrate des Fluides entsprechend dem AUS-Steuerbefehlswert, und
die Steuerung des Weiteren eine Korrektureinheit beinhaltet, die den Mindeststeuerbefehlswert des Ventilatorgebläses korrigiert, welcher durch die Einstelleinheit eingestellt ist, unter Berücksichtigung der Hystereseeigenschaften.

## Revendications

1. Système de pile à combustible comprenant :
une pile à combustible (34) générant de l'électricité par l'utilisation de combustible et d'un gaz oxydant ;
un logement (10a) qui stocke la pile à combustible ;
un ventilateur (42) grâce auquel une partie interne du logement est ventilée ;
un commutateur de détection de l'état de l'écoulement (60), disposé sur un trajet de circulation de liquide qui s'écoule sous l'effet de la ventilation ;
un contrôleur (15) qui contrôle au moins le ventilateur,
dans lequel le contrôleur contrôle la quantité d'entraînement du ventilateur,
**caractérisé en ce que** le commutateur de détection de l'état de l'écoulement (60) émet un signal MARCHE si le liquide circule et émet un signal ARRET si le liquide ne circule pas, lorsque le ventilateur entraîne la ventilation d'une partie interne du logement et que le contrôleur contient une unité de stockage qui stocke une valeur de commande de contrôle du ventilateur sous forme d'une valeur de commande de contrôle de commutateur, la valeur de commande de contrôle de ventilateur correspondant à la quantité d'entraînement du ventilateur, lorsqu'une sortie du commutateur de détection de l'état de l'écoulement est commutée, et une unité de paramétrage qui paramètre la valeur de commande de contrôle minimale du ventilateur en fonction de la valeur de commande de contrôle du commutateur stockée dans l'unité de stockage.

2. Système de pile à combustible selon la revendication 1, dans lequel,
avant qu'une opération de démarrage du système de pile à combustible ne soit lancée, l'unité de stockage assure le stockage, et
l'unité de paramétrage assure le paramétrage en fonction de la valeur de commande de contrôle du commutateur stockée dans l'unité de stockage.

3. Système de pile à combustible selon la revendication 1 ou 2, dans lequel
l'unité de stockage assure le stockage régulièrement lors d'une opération de démarrage, d'une opération de génération ou d'une opération de suspension du système de pile à combustible, et
l'unité de paramétrage assure le paramétrage en fonction de la valeur de commande de contrôle du commutateur stockée dans l'unité de stockage.

4. Système de pile à combustible selon l'une quelconque des revendications 1 à 3, dans lequel
l'unité de stockage assure le stockage lorsque la sortie du commutateur de détection de l'état de l'écoulement qui se trouve sur le signal MARCHE passe au signal ARRET lors d'une opération de démarrage, d'une opération de génération ou d'une opération de suspension du système de pile à combustible, et
l'unité de paramétrage assure le paramétrage en fonction de la valeur de commande de contrôle du commutateur stockée dans l'unité de stockage.

5. Système de pile à combustible selon l'une quelconque des revendications 1 à 4, dans lequel
la valeur de commande de contrôle du commutateur est une valeur de commande de contrôle du ventilateur correspondant à la quantité d'entraînement du ventilateur, lorsque la sortie du commutateur de détection de l'état de l'écoulement qui se trouve sur le signal ARRET passe au signal ON.

6. Système de pile à combustible selon l'une quelconque des revendications 1 à 5, dans lequel
la valeur de commande de contrôle du commutateur possède une valeur de commande de contrôle MARCHE et une valeur de commande de contrôle ARRET, la valeur de commande de contrôle MARCHE étant une valeur lorsque la sortie du commutateur de détection de l'état de l'écoulement est commutée du signal ARRET au signal MARCHE et la valeur de commande de contrôle ARRET étant une valeur lorsque la sortie du commutateur de détection de l'état de l'écoulement est commutée du signal MARCHE au signal ARRET,
le commutateur de détection de l'état de l'écoulement présente des caractéristiques d'hystérèse ayant pour conséquence qu'un premier débit du liquide correspondant à la valeur de commande de contrôle MARCHE soit supérieur à un second débit du liquide correspondant à la valeur de commande de contrôle ARRET, et
le contrôleur contient en outre une unité de correction qui corrige la valeur de commande de contrôle minimale du ventilateur paramétrée par l'unité de paramétrage en tenant compte des caractéristiques d'hystérèse.
